# EUROPÄISCHE PATENTSCHRIFT

(11) **EP 0 428 833 B1**
(45) Veröffentlichungstag und Bekanntmachung des Hinweises auf die Patenterteilung: **09.11.1994**
(21) Anmeldenummer: 90115735.4
(22) Anmeldetag: 17.08.1990
(51) Int. Cl.: F16L 9/12, F16L 11/12

(54) **Durch Koextrusion hergestellte Kraftfahrzeugrohrleitung aus Kunststoff**
Plastic vehicle conduit fabricated by coextrusion
Conduite pour automobiles en matière plastique fabriquée par coextrusion

(30) Priorität: 17.01.1990 DE 4001125; 20.11.1989 DE 3938497
(43) Veröffentlichungstag der Anmeldung: 29.05.1991
(73) Patentinhaber: Technoflow Tube-Systems GmbH, 34277 Fuldabrück (DE)
(72) Erfinder: Brunnhofer, Erwin, D-3501 Fuldabrück 1 (DE)
(74) Vertreter: Andrejewski, Walter

(56) Entgegenhaltungen:
- DE-A- 3 820 447
- DE-C- 3 821 723
- DE-U- 8 008 440
- FR-A- 2 579 290

## Beschreibung

Die Erfindung betrifft eine durch Koextrusion hergestellte, mehrschichtige Kraftfahrzeugrohrleitung aus Kunststoff. Der Begriff Kraftfahrzeugrohrleitung umfaßt im Rahmen der Erfindung auch Schlauchleitungen. - Kraftfahrzeugrohrleitung bezeichnet die Tatsache, daß die Rohrleitung werkmäßig in einem Kraftfahrzeug installiert wird. Sie kann aber auch nachträglich im Wege der Wartung oder Reparatur eingebaut werden. Sie dient hauptsächlich der Führung des Kraftstoffes. Der Kraftstoff kann eine alkoholische Komponente aufweisen. Insoweit handelt es sich um eine Kraftfahrzeugrohrleitung, die insbes. für die Führung eines alkoholischen Mediums bestimmt ist. Der Begriff alkoholisches Medium bezeichnet in diesem Zusammenhang nicht nur Kraftstoff mit Alkoholzusatz oder hauptsächlich aus Alkohol bestehenden Kraftstoff. Der Begriff alkoholisches Medium bezeichnet insoweit z. B. auch die Flüssigkeit einer Scheibenwaschanlage sowie das Druckmedium eines Bremssystems. Bekanntlich wird in DruckluftBremssysteme Alkohol eingeführt, um das Gefrieren von Kondensat zu verhindern. Alkohol meint im Rahmen der Erfindung insbes. Methylalkohol sowie Äthylalkohol und Mischungen davon mit Wasser, aber auch höherwertige Alkohole.

Die bekannte Kraftfahrzeugrohrleitung, von der die Erfindung ausgeht (DE 38 21 723), besteht aus einer rohrförmigen Außenschicht aus Polyamid 12. Sie bestimmt die Festigkeit der Kraftfahrzeugrohrleitung. Im übrigen ist eine rohrinnenseitig geschlossene Schutzschicht aus Polyamid 6 bzw. 6.6 bzw. 11 bzw. 12 vorgesehen, die über eine zwischengeschaltete Schicht an die Außenschicht aus Polyamid 12 angeschlossen ist. Die zwischengeschaltete Schicht besteht aus einem Polyolefin. Die bekannte Kraftfahrzeugrohrleitung ist auch unter besonderen Betriebsbedingungen sicher und mit großer Standzeit, d. h. Iangzeitig, brauchbar. Besondere Betriebsbedingungen liegen vor, wenn das Medium, welches die Kraftfahrzeugrohrleitung führt, z. B. oberflächenaktive Substanzen aufweist oder Sauerstoff freisetzt. Das führt bei anderen als den vorstehend beschriebenen Kraftfahrzeugrohrleitungen (DE 38 21 723) häufig zu Spannungsrissen und störenden Oxidationen. Andererseits enthalten die Kunststoffe der bekannten Kraftfahrzeugrohrleitung in dem Kraftstoff lösliche Substanzen, z. B. Monomere oder Oligomere. Es kann dann vorkommen, daß der Kraftstoff aus der mehrschichtigen Wand der Kraftfahrzeugrohrleitung lösbare Bestandteile herauslöst. Das beeinträchtigt die Standzeit der bekannten Kraftfahrzeugrohrleitung kaum, stört jedoch aus anderen Gründen: Wenn ein Kraftfahrzeug nach der Erstbefüllung mit Kraftstoff längere Zeit steht, beispielsweise verschifft wird oder Wochen und Monate auf die Auslieferung wartet, verändert sich in den Kraftstoffleitungen die Kraftstoffzusammensetzung. In dem Kraftstoff enthaltener Alkohol und Aromate diffundieren sehr viel schneller durch die mehrschichtige Rohrwand der Kraftfahrzeugrohrleitung als die aliphatischen Komponenten. Durch die Veränderung der Kraftstoffzusammensetzung verändern sich die Löslichkeitsgrenzen derjenigen Substanzen, die zuvor aus der mehrschichtigen Rohrwand herausgelöst sind. Insbes. die Monomere und Oligomere des Polyamid 11 bzw. des Polyamid 12 gelangen in diesem ruhenden Kraftstoff zur Kristallisation und damit zu Ausfällungen. Die Anwesenheit von Kupferionen beschleunigt dieses Kristallisationverhalten in manchen Fällen zusätzlich. Kupferionen im Kraftstoff stammen z. B. aus Kollektorabrieb einer Benzinpumpe. Die ausgefällten Substanzen können zu Filterverstopfungen führen, sammeln sich möglicherweise im Bewegungsraum des Schwimmers des Vergasers und behindern die Schwimmerbewegung oder verstopfen bei Einspritzmotoren die Einspritzdüsen. Auch können sich Beläge auf Steuerkanten der Einspritzpumpen bilden. Im übrigen sind die Zugfestigkeit und Zähigkeit der bekannten Kraftfahrzeugrohrleitung verbesserungsfähig.

Der Erfindung liegt die Aufgabe zugrunde, eine durch Koextrusion hergestellte Kraftfahrzeugrohrleitung aus Kunststoff zu schaffen, bei der lösbare Substanzen der eingesetzten Kunststoffe in störendem Maße nicht mehr in Lösung gehen und die sich darüber hinaus durch eine sehr hohe Zugfestigkeit und Zähigkeit auszeichnet.

Zur Lösung dieser Aufgabe ist Gegenstand der Erfindung eine durch Koextrusion hergestellte Kraftfahrzeugrohrleitung aus Kunststoff, bestehend aus einer rohrförmigen Aussenschicht aus Polyamid 11 oder 12, einer Zwischenschicht aus Polyamid 6, einer Lösungsinhibitorschicht aus einem Copolymer aus Äthylen und Vinylalkohol und einer Innenschicht aus Polyamid 6, wobei zwischen der Außenschicht und der Zwischenschicht eine dünne Haftvermittlerschicht aus Polyäthylen oder Polypropylen zwischengeschaltet ist. Die Außenschicht besitzt eine Dicke von 0,2 bis 0,7 mm, die Zwischenschicht eine Dicke von 0,05 bis 0,5 mm. Die Lösungsinhibitorschicht weist einen Äthylenanteil von 30 bis 45 Masse% auf. Die Lösungsinhibitorschicht besitzt eine Dicke von 0,1 bis 0,2 mm. Die Haftvermittlerschicht genügt allen Anforderungen und trägt im Verbund auch zur Zugfestigkeit und Zähigkeit bei, wenn sie aktive Seitenketten aus Maleinsäureanhydrit und eine Dicke von 0,05 bis 0,2 mm aufweist. Die Innenschicht wird zweckmäßigerweise extrem dünn ausgeführt, beispielsweise in einer Dicke von 0,1 bis 0,3 mm oder weniger.

Die erreichten Vorteile sind darin zu sehen, daß bei der erfindungsgemäßen Kraftfahrzeugrohrleitung zunächst durch die Lösungsinhibitorschicht verhindert wird, daß aus dieser Schicht und den nach außen hin vorgeordneten Schichten Monomere, Oligomere oder andere Substanzen in Lösung gehen. Die Innenschicht kann so dünn geh alten werden, daß die Menge der daraus herauslösbaren Substanzen verschwindend klein ist und nicht mehr stört. Es besteht auch die Möglichkeit, die Innenschicht aus einem besonders aufbereiteten Polyamid 6 herzustellen, der lösbare Monomere und Oligomere praktisch nicht enthält. Andererseits erreicht man durch den beschriebenen Schichtaufbau über Verbundwirkungen eine hohe Zugfestigkeit und Zähigkeit.

Im folgenden wird die Erfindung anhand eines Ausführungsbeispiels, zu dem eine Zeichnung gehört, welche einen Querschnitt durch eine erfindungsgemäße Rohrleitung zeigt, ausführlicher erläutert.

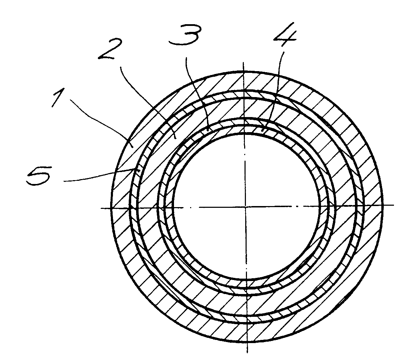

Die Figur zeigt eine durch Koextrusion hergestellte Kraftfahrzeugrohrleitung aus Kunststoff. Sie besteht aus einer rohrförmigen Außenschicht 1 aus Polyamid 11 oder 12. Sie besitzt eine Zwischenschicht 2 aus Polyamid 6 und eine Lösungsinhibitorschicht 3 aus einem Copolymer aus Äthylen und Vinylalkohol. Eine Innenschicht 4 aus Polyamid 6 ist angeschlossen. Zwischen der Außenschicht 1 und der Zwischenschicht 2 aus Polyamid 6 befindet sich eine dünne Haftvermittlerschicht 5 aus Polyäthylen oder Polypropylen. Auch die Innenschicht 4 aus Polyamid 6 ist sehr dünn. Durch Koextrusion wurden die beschriebenen Schichten in Verbund gebracht.

Die Außenschicht 1 weist eine Dicke von 0,2 bis 0,7 mm auf. Die Innenschicht 4 ist demgegenüber regelmäßig beachtlich dünner eingestellt, und zwar im Wanddickebereich von 0,1 bis 0,3 mm. Die Lösungsinhibitorschicht 3 besteht aus einem Copolymer aus Äthylen und Vinylalkohol, und zwar bei einem Äthylenanteil von 30 bis 40 Masse%. Ihre Dicke liegt im Bereich von 0,1 bis 0,2 mm. Die Haftvermittlerschicht 5 mag aktive Seitenketten aus Maleinsäureanhydrit und eine Dicke von 0,05 bis 0,2 mm besitzen. Als Material für die Innenschicht 4 kann nach bevorzugter Ausführungsform der Erfindung auch ein nachkondensiertes Polyamid 6 mit einem niedrigen Monomergehalt benutzt werden.

## Patentansprüche

1. Durch Koextrusion hergestellte Kraftfahrzeugrohrleitung aus Kunststoff, bestehend aus
einer rohrförmigen Außenschicht (1) aus Polyamid 11 oder 12,
einer Zwischenschicht (2) aus Polyamid 6,
einer Lösungsinhibitorschicht (3) aus einem Copolymer aus Äthylen und Vinylalkohol,
einer Innenschicht (4) aus Polyamid 6,
einer dünnen Haftvermittlerschicht (5) aus Polyäthylen oder Polypropylen zwischen der Außenschicht (1) und der Zwischenschicht (2),
wobei die Außenschicht (1) eine Dicke von 0,2 bis 0,7 mm besitzt, wobei die Zwischenschicht (2) eine Dicke von 0,05 bis 0,5 mm besitzt und wobei die Lösungsinhibitorschicht (3) einen Äthylenanteil von 30 bis 45 Masse% sowie eine Dicke von 0,1 bis 0,2 mm besitzt.

2. Kraftfahrzeugrohrleitung nach Anspruch 1, wobei die Innenschicht eine Dicke von 0,1 bis 0,5 mm oder weniger besitzt.

3. Kraftfahrzeugrohrleitung nach einem der Ansprüche 1 oder 2, wobei die Haftvermittlerschicht aktive Seitenketten aus Maleinsäureanhydrit und eine Dicke von 0,05 bis 0,2 mm besitzt.

## Claims

1. A motor vehicle pipeline made of plastics material and manufactured by co-extrusion, consisting of
a tubular outer layer (1) made of polyamide 11 or 12,
an intermediate layer (2) made of polyamide 6,
a solution inhibitor layer (3) made of a copolymer of ethylene and vinyl alcohol,
an inner layer (4) made of polyamide 6,
a thin bonding agent layer (5) made of polyethylene or polypropylene between the outer layer (1) and the intermediate layer (2),
wherein the outer layer (1) has a thickness of 0.2 to 0.7 mm, wherein the intermediate layer (2) has a thickness of 0.05 to 0.5 mm, and wherein the solution inhibitor layer (3) has an ethylene content of 30 to 45 weight % and a thickness of 0.1 to 0.2 mm.

2. A motor vehicle pipeline according to claim 1, wherein the inner layer has a thickness of 0.1 to 0.5 mm or less.

3. A motor vehicle pipeline according to either one of claims 1 or 2, wherein the bonding agent layer has active side chains of maleic anhydride and a thickness of 0.05 to 0.2 mm.

## Revendications

1. Conduite en matière plastique pour véhicules automobiles fabriquée par coextrusion, comprenant une couche tubulaire extérieure (1) en polyamide 11 ou 12, une couche intermédiaire (2) en polyamide 6, une couche d'inhibiteur de dissolution (3) en un copolymère d'éthylène et d'alcool vinylique, une couche intérieure (4) de polyamide 6, une mince couche d'agent adhésif (5) en polyéthylène ou polypropylène, entre la couche extérieure (1) et la couche intermédiaire (2), la couche extérieure (1) présentant une épaisseur de 0,2 à 0,7 mm, la couche intermédiaire (2) présentant une épaisseur de 0,05 à 0,5 mm, et la couche d'inhibiteur de dissolution (3) contenant 30 à 45 % en masse d'éthylène et présentant une épaisseur de 0,1 à 0,2 mm.

2. Conduite pour véhicules automobiles selon la revendication 1, dans laquelle la couche intérieure présente une épaisseur de 0,1 à 0,5 mm ou moins.

3. Conduite pour véhicules automobiles selon l'une des revendications 1 ou 2, dans laquelle la couche d'agent adhésif comprend des chaînes latérales d'anhydride maléique et présente une épaisseur de 0,05 à 0,2 mm.
